# EUROPÄISCHE PATENTSCHRIFT

(11) **EP 0 836 559 B1**
(45) Veröffentlichungstag und Bekanntmachung des Hinweises auf die Patenterteilung: **04.08.1999**
(21) Anmeldenummer: 96919699.7
(22) Anmeldetag: 07.05.1996
(51) Int. Cl.: B60K 41/26, B60T 11/10, B60T 13/14

(54) **INCHBREMSEINRICHTUNG MIT MITEINANDER VERBUNDENEN BREMS- UND INCHVENTILEN**
INCHING AND BRAKING SYSTEM WITH INTERCONNECTED BRAKE AND INCHING VALVES
SYSTEME DE FREINAGE GRADUEL AVEC SOUPAPES DE FREINAGE ET DE RALENTISSEMENT GRADUEL RELIEES ENTRE ELLES

(30) Priorität: 13.07.1995 DE 19525582
(43) Veröffentlichungstag der Anmeldung: 22.04.1998
(73) Patentinhaber: Mannesmann Rexroth AG, 97816 Lohr am Main (DE)
(72) Erfinder: MIES, Hubertus, D-97816 Lohr (DE)
(74) Vertreter: Winter, Brandl, Fürniss, Hübner, Röss, Kaiser, Polte, Kindermann Partnerschaft
(86) Internationale Anmeldenummer: EP9601906
(87) Internationale Veröffentlichungsnummer: WO9702964

(56) Entgegenhaltungen:
- EP-A- 0 127 123
- EP-A- 0 223 686
- DE-U- 8 437 986
- FR-A- 2 485 998
- US-A- 3 898 812
- US-A- 4 651 846

## Beschreibung

Die Erfindung betrifft eine Inchbremseinrichtung für ein hydraulisch betriebenes Arbeitsgerät gemäß dem Oberbegriff des Patentanspruchs 1. Derartige Inchbremseinrichtungen sind wohlbekannt.

Bei schweren Nutzfahrzeugen, wie beispielsweise Radladern, Hubstaplern, etc. ist es bekannt, zum Abbremsen des Arbeitsgeräts neben der eigentlichen Bremsanlage auch das Antriebssystem zu nutzen, um eine Bremskraft aufzubringen. Das Bremsen mit dem Antriebssystem wird allgemein als "Inchen" bezeichnet. Die Aufteilung der Bremskraft auf die Bremsanlage und das Antriebssystem hat den Vorteil, daß der Bremsenverschleiß des Arbeitsgeräts ganz erheblich verringert werden kann, da bei geringen Geschwindigkeitsänderungen vorwiegend das Antriebssystem zum Abbremsen genutzt werden kann.

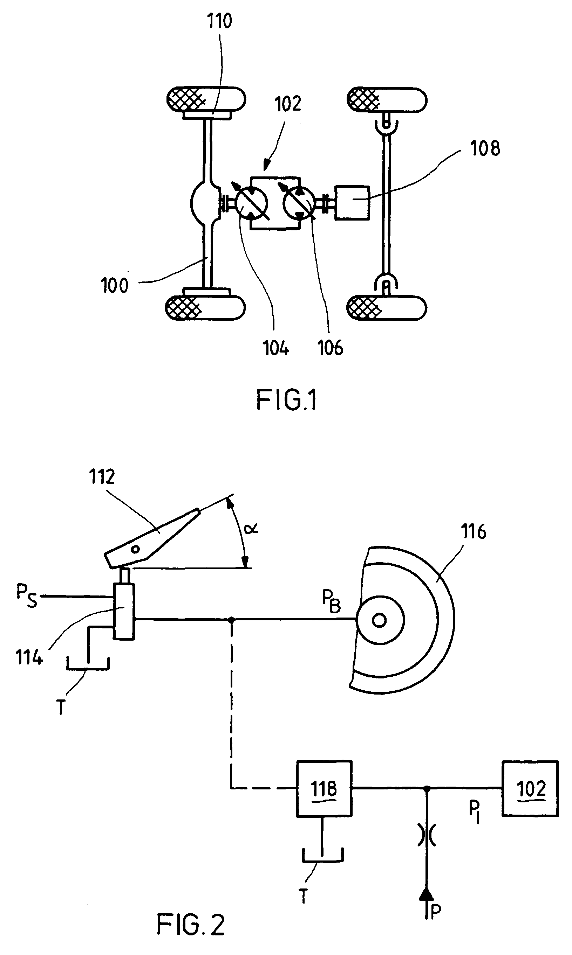

In Fig. 1 ist schematisch das Antriebssystem eines Nutzfahrzeugs dargestellt, dessen angetriebene Achse 100 mittels eines hydrostatischen Antriebs 102 angetrieben wird. Dieser hat beispielsweise einen Hydromotor 104 mit verstellbarem Verdrängungsvolumen, der von einer Verstellpumpe 106 mit Hydraulikfluid versorgt wird, die ihrerseits von einem Motor 108 angetrieben wird. Zur Erzeugung einer Bremswirkung durch das Antriebssystem kann entweder direkt an der angetriebenen Achse 100 oder genauer gesagt, im Bereich der Einheit Hydromotor/Verstellpumpe 104, 106 oder im Bereich des Verbrennungmotors 108 eingegriffen werden, wobei bei letzterem beispielsweise die Nockenwellensteuerung oder eine Motorbremse ansteuerbar ist.

Eine in derartigen Systemen einsetzbare, herkömmliche Inchbremseinrichtung ist in Fig. 2 dargestellt. Die Ansteuerung der Inchbremseinrichtung erfolgt über eine Betätigungseinrichtung, beispielsweise ein Bremspedal 112, das über eine Betätigungsstange auf ein Inchbremsventil 114 wirkt. Am Inchbremsventil 114 liegt ein Speicherdruck pS an, der über einen Druckspeicher oder über eine geeignete Pumpe zur Verfügung gestellt wird. Bei Betätigung des Bremspedals 112 und der daraus resultierenden Verschwenkung um den Winkel (α wird vom Inchbremsventil 114 ein Bremsdruck PB abgegeben, der zu einer Bremseinheit 116 geführt wird, die beispielsweise als Lamellenbremse ausgebildet werden kann. Die Bremseinheit 116 ist über eine nicht gezeigte Rückstellfeder oder ein Vorspannventil derart vorgespannt, daß die Bremse erst nach Überschreiten eines Mindestdruckes von beispielsweise 9 bar eingreift. Beim Loslassen des Bremspedals 112 wird die Verbindung zwischen dem Druckspeicher und der Bremseinheit 116 unterbrochen und der Bremsdruck p_{B} in einen Tank T entspannt, so daß die Bremseinheit 116 drucklos ist.

Von der den Bremsdruck p_{B} fahrenden Bremsleitung zweigt eine Steuerleitung ab, die zu einem Übersetzer oder Inchventil 118 geführt ist, über das das Antriebssystem 102 des Arbeitsgerätes ansteuerbar ist. Dabei wird in Abhängigkeit vom anliegenden Steuerdruck, der dem Bremsdruck p_{B} entspricht, ein beispielsweise von einer Zahnradpumpe gelieferter Strom Q mit einem Druck p auf einen Steuer- oder Inchdruck p_{I} umgeformt, der beispielsweise zur Ansteuerung eines Fahrtrichtungsschaltventils und damit des Stellzylinders der Verstellpumpe 106 des Antriebssystems 102 verwendet werden kann.

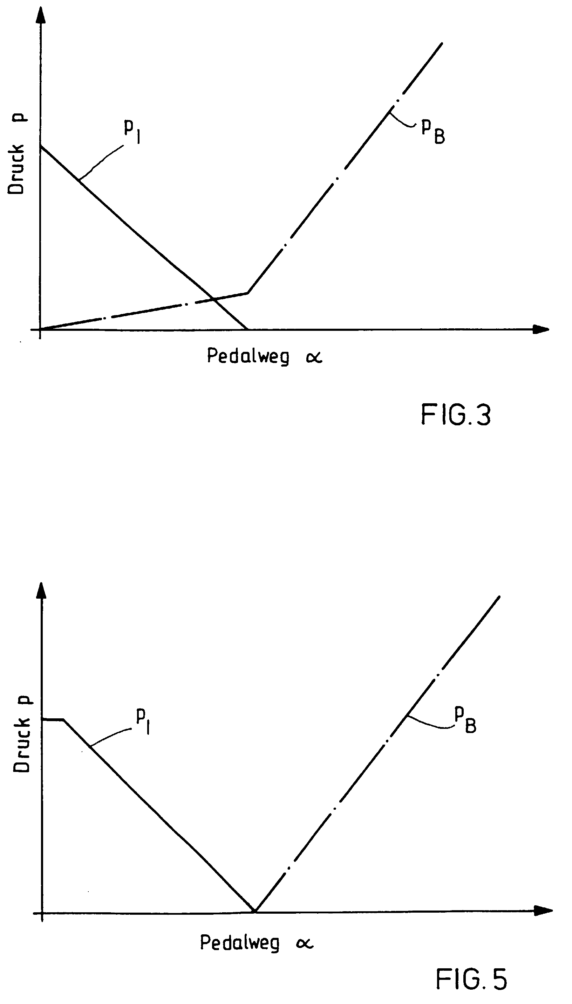

Wie in Fig. 3 mit strichpunktierten Linien dargestellt ist, ist das bekannte Inchbremsventil 114 derart ausgelegt, daß der Bremsdruck PB mit zunehmender Verschwenkung des Bremspedals 112 (Pedalweg α) ansteigt, so daß die Bremseinheit 116 mit zunehmendem Pedalweg α eine größere Verzögerung des Fahrzeugs bewirkt. Wie im folgenden nach eingehend erläutert werden wird, ist die Charakeristik des Inchbremsventils 114 üblicherweise derart gewählt, daß in einem ersten Abschnitt ein flacher Anstieg des Bremsdrucks p_{B} mit dem Pedalweg α erfolgt, während in einem sich daran anschließenden zweiten Abschnitt der Bremsdruck p_{B} steiler ansteigt. Dabei ist der flache Teil der PB-Kennlinie dem Inchvorgang zugeordnet, während der steil ansteigende Teil der pB-Kennlinie dem eigentlichen Bremsvorgang durch die Bremseinheit 116 zugeordnet ist (vorgespannte Achsen).

Wie des weiteren aus Fig. 3 entnehmbar ist, fällt der Inchdruck p_{I} (durchgezogene Linie in Fig. 3) mit steigendem Pedalweg α von einem Maximalwert auf einen Wert gegen 0 ab. Dies bedeutet, daß bei unbetätigtem Bremspedal 112 die Antriebseinheit 102 über das Inchventil 118 mit dem maximalen Inchdruck p_{I}, der seinerseits drehzahlabhängig ist, versorgt wird, wobei das Inchventil 118 ähnlich wie ein Druckbegrenzungsventil wirkt und eine Verbindung zum Tank T hin öffnet, falls der Druck p_{I} größer ist, als der vorgewählte maximale Inchdruck. Mit zunehmendem Pedalweg α steigt der Bremsdruck PB und entsprechend der am Inchventil 118 anliegende Steuerdruck an, so daß entsprechend der Kennlinie des Inchventils 118 der Inchdruck p_{I} abfällt und die Verstellpumpe der Antriebseinheit 102 hinsichtlich der Förderung zurückgenommen und das Arbeitsgerät durch diese Ansteuerung der Antriebseinheit 102 abgebremst wird.

Der Inchdruck p_{I} erreicht etwa dann seinen Minimalwert (0), wenn der Bremsdruck in den Bereich gelangt, in den der Bremsvorgang über die Bremseinheit 116 beginnt. Infolge ihrer Vorspannung greift die Bremseinheit 116 erst dann, wenn der von der Vorspannung vorgegebene Grenzwert (beispielsweise 9 bar) überschritten wird.

Hinsichtlich des konstruktiven Aufbaus des Inchbremsventils 114 und des Inchventils 118 sei auf die ältere Anmeldung P 195 13 805 (enspricht der Publikation WO96/32300, veröffentlicht 17.10.1996) der Anmelderin verwiesen, in der bereits eine herkömmliche Inchbremseinheit beschrieben ist. Der Gegenstand dieser älteren Patentanmeldung ist auch zur Offenbarung der vorliegenden Patentanmeldung zu rechnen.

Die in der Fig. 3 dargestellten Kennlinien des Inchbremsventils 114 und des Inchventils 118 lassen sich nur dann erzielen, wenn diese beiden Komponenten exakt aufeinander abgestimmt sind. Bereits bei geringsten Abweichungen von der vorgewählten Konfiguration kann es insbesondere im Übergangsbereich, in dem der Inchdruck nahezu auf 0 abgesunken ist, während der an der Bremseinheit 116 anliegende Bremsdruck seinen Schwellwert (Federvorspannung) erreicht, in dem die Bremseinheit 116 greift, zu Unstetigkeiten in der Ansteuerung durch die Überlagerung der Inchbremswirkung mit der Bremswirkung der Bremseinheit 116 kommen.

Dies kann dazu führen, daß die Bedienperson das Arbeitsgerät nicht über den gesamten Inchbereich mit der erforderlichen Feinfühligkeit bedienen kann.

Demgegenüber liegt der Erfindung die Aufgabe zugrunde, eine Inchbremseinheit zu schaffen, bei der mit minimalem vorrichtungstechnischem Aufwand eine verbesserte Inchfunktion gewährleistet ist.

Diese Aufgabe wird durch die Merkmale des Patentanspruchs 1 gelöst.

Durch die Maßnahme, die Inchventilanordnung und die Bremsventilanordnung der Inchbremseinrichtung durch eine Übertragungseinrichtung zu koppeln, kann die Ansteuerung der Inchbremseinrichtung unabhängig vom Bremsdruck pB erfolgen, da nunmehr beispielsweise die Bewegung des Ventilschiebers der Bremsventilanordnung zur Ansteuerung der Inchventilanordnung verwendet werden kann.

Durch entsprechende Ausgestaltung des Übertragungsmechanismus kann somit die Ansteuerung der Bremsventilanordnung derart ausgelegt werden, daß sich ein Bremsdruck PB erst dann aufbaut, wenn der Inchdruck p_{I} gegen 0 abgesunken ist. Gegenüber herkömmlichen Lösungen hat die erfindungsgemäße Inchbremseinrichtung den großen Vorteil, daß auf die Vorspannung der Bremseinheit oder auf Vorspannventile verzichtet werden kann, da nunmehr erst dann ein Bremsdruck p_{B} aufgebaut wird, wenn der Inchdruck p_{I} abgesunken ist. Da keine Vorspannung der Bremseinheit erforderlich ist, kann der Bremsenverschleiß erheblich verringert werden, so daß eine nahezu wartungsfreie Bremse herstellbar ist.

Die erfindungsgemäße Inchbremseinrichtung hat somit bei verbesserter Feinfühligkeit einen erheblich einfacheren Aufbau als herkömmliche Lösungen.

Eine besonders kompakte Inchbremseinrichtung erhält man, wenn die Bremsventilanordnung und die Inchventilanordnung in einem gemeinsamen Ventilgehäuse aufgenommen sind, so daß praktisch die Inchventilanordnung in die Bremsventilanordnung integriert ist.

Eine einfach aufgebaute Übertragungseinrichtung erhält man, wenn der Bremsventilschieber über einen Stift auf einen Inchventilschieber wirkt und die Ventilschieber und der Stift in einer gemeinsamen Ventilbohrung aufgenommen sind.

Durch die Ausbildung der Inchventilanordnung als Proportionalventil, über das ein Tank mit dem Steuerölanschluß der Antriebseinheit verbindbar ist, ist eine stufenlose Umformung eines zur Verfügung stehenden Systemdrucks p in den Inchdruck p_{I} ermöglicht, wobei die Inchventilanordnung auch als Druckbegrenzungsventil zur Einstellung eines maximalen Inchdrucks p_{I} verwendbar ist.

Die Übertragung der Stellbewegung einer Betätigungseinrichtung der Inchbremseinrichtung erfolgt vorzugsweise über zwei Druckfedern, die auf die Ventilschieberkombination wirken, wobei zunächst im wesentlichen eine Druckfeder mit geringerer Federsteifigkeit komprimiert wird, während eine zweite Druckfeder mit wesentlich größerer Federsteifigkeit im wesentlichen erst dann Wirkung entfaltet, wenn der eigentliche Bremsvorgang über die Bremseinheit eingeleitet wird. Das heißt, die Druckfeder mit geringerer Federsteifigkeit ist dem eigentlichen Inchvorgang zugeordnet und ist in dem Bereich wirksam, in dem der Inchdruck p_{I} von seinem Maximalwert auf einen Wert gegen 0 reduziert wird.

Besonders vorteilhaft ist es, wenn der Inchbremseinrichtung eine Druckpunkteinrichtung zugeordnet wird, über die im Übergangsbereich zum Ende des Inchvorgangs und bei Beginn des eigentlichen Bremsvorgangs über die Bremseinheit ein Druckpunkt aufgebaut wird, der bei der Betätigung der Betätigungseinrichtung durch die Bedienperson überwunden werden muß. Die Bedienperson erhält somit eine Information darüber, daß der Inchvorgang beendet ist und nunmehr der Bremsvorgang mit einer größeren Verzögerung beginnt. Durch die optionale Ausgestaltung der Inchbremseinrichtung ist einem versehentlichen Überbremsen des Arbeitsgerätes durch die Bedienperson vorgebeugt. Die Druckpunkteinrichtung ist Gegenstand der vorgenannten älteren Patentanmeldung P 195 13 805, so daß hinsichtlich weiterer Details auf die Offenbarung dieser Anmeldung verwiesen sei.

Der Maximaldruck P_{Max} des von der Pumpe P gelieferten Volumenstroms läßt sich einstellen, indem einer Ventilfeder, die den vorgenannten Druckfedern entgegenwirkt eine Einstelleinrichtung zur Variation der Federvorspannung zugeordnet wird.

Mit den vorteilhaften Weiterbildungen gemäß den Unteransprüchen 11 oder 12 lassen sich auch bereits vorhandene Ventilgehäuse auf einfache Weise für die erfindungsgemäße Inchbremseinrichtung nutzen.

Weitere vorteilhafte Weiterbildungen der Erfindung sind Gegenstand der sonstigen Unteransprüche.

Im folgenden werden bevorzugte Ausführungsbeispiele der Erfindung anhand schematischer Zeichnungen näher erläutert.

Es zeigen:
Fig. 1 eine schematische Darstellung des Antriebs eines Arbeitsgerätes;
Fig. 2 ein Blockschaubild einer bekannten Inchbremseinrichtung für ein Arbeitsgerät;
Fig. 3 Kennlinien eines Inchbremsventils und eines Inchventils der bekannten Inchbremseinrichtung;
Fig. 4 einen Hydraulikschaltplan einer erfindungsgemäßen Inchbremseinrichtung;
Fig. 5 Kennlinien der erfindungsgemäßen Inchbremseinrichtung aus Fig. 4;
Fig. 6a einen Längsschnitt durch ein Ventilgehäuse einer Inchbremseinrichtung gemäß Fig. 4;
Fig. 6b eine alternative Ausführungsform zur Inchbremseinrichtung aus Fig. 6a und
Fig. 7 ein weiteres Ausführungsbeispiel einer erfindungsgemäßen Inchbremseinrichtung.

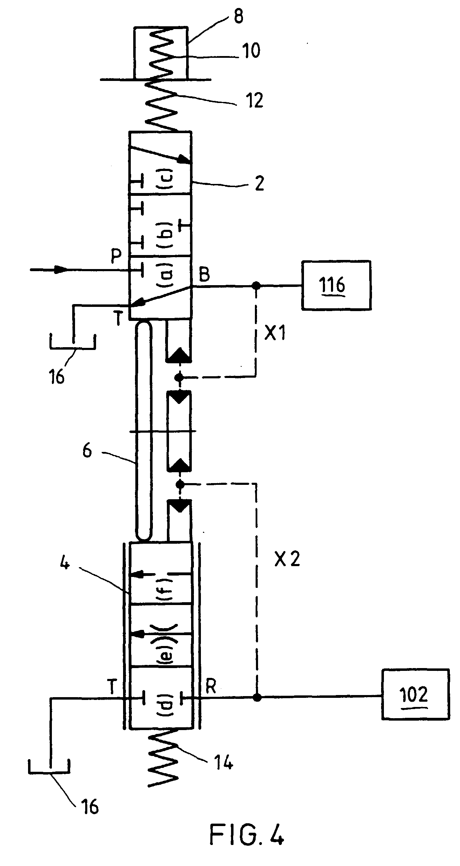

In Fig. 4 ist eine Schaltung einer erfindungsgemäßen Inchbremseinrichtung dargestellt. Diese hat ein Bremsventil, im folgenden Inchbremsventil 2 genannt und ein Inchventil 4, deren Ventilschieber über eine Übertragungseinrichtung 6 miteinander gekoppelt sind. Die Betätigung dieser Ventilanordnung erfolgt durch eine Bedienperson über ein Bremspedal 8, das über zwei koaxial hintereinander angeordnete Druckfedern 10 und 12 auf dem Ventilschieber des Inchbremsventils 2 abgestützt ist. Auf den Aufbau und die Auslegung der Druckfedern 10, 12 wird im folgenden noch näher eingegangen. Diesen ist ein als Federhubbegrenzung wirkender Anschlag 13 zugeordnet.

An dem von den Druckfedern 10, 12 entfernten Endabschnitt der Ventilschieberanordnung, d.h. an der in Fig. 4 unteren Stirnseite des Ventilschiebers des Inchventils 4 ist eine Ventilfeder 14 angeordnet, so daß die Ventilschieber des Inchbremsventils 2 und des Inchventils 4 in der Ruhestellung zwischen die Ventilfeder 14 und die beiden Druckfedern 10, 12 eingespannt sind. Die Übertragungseinrichtung 6 ist dabei eine Art Distanzhalter, der mit einem gewissen Spiel zwischen die Ventilschieber von Inchbremsventil 2 und Inchventil 4 eingefügt ist.

Beim gezeigten Ausführungsbeispiel ist das Inchbremsventil 2 als 3/3-Wege-Schaltventil ausgebildet. Ein Anschluß P des Inchbremsventils 2 ist an eine Druckquelle, beispielsweise einen Hydrospeicher oder eine Hydraulikpumpe angeschlossen. Ein zweiter Anschluß B führt zur Bremseinheit 116 und ein dritter Anschluß T führt zu einem Hydraulikfluidtank 16.

In der Schaltstellung a ist der Bremsanschluß B mit dem Tankanschluß T verbunden, so daß der Druck in der zur Bremseinheit 116 fahrenden Bremsleitung in den Tank 16 entspannt wird und die Bremse drucklos, d.h. außer Eingriff ist (Entlastungsstellung). Der Anschluß P ist abgesperrt.

In der zweiten Schaltstellung b sind alle drei Anschlüsse P, T und B geschlossen, so daß Hydraulikfluid weder zur Bremseinheit 116 noch von dieser abgeführt werden kann (Regelstellung).

In der dritten Schaltstellung c ist der Tankanschluß T abgesperrt, während der Anschluß P mit dem Bremsanschluß B verbunden ist, so daß druckbeaufschlagtes Hydraulikfluid zur Bremseinheit 116 geführt wird und diese zur Verzögerung des Arbeitsgerätes betätigt wird (Füllstellung).

Von der zur Bremseinheit 116 fahrenden Bremsleitung ist eine Steuerdruckleitung X₁ zu der von den Druckfedern 10, 12 entfernten Ventilschieberrückseite geführt, so daß durch den Steuerdruck in der Steuerdruckleitung X₁ an der Kolbenrückseite ein Druck aufgebaut wird, der gegen die von den Druckfedern 10, 12 aufgebaute Kraft wirkt.

Von der Steuerdruckleitung X₁ zweigt eine Zweigleitung ab, über die die Übertragungseinrichtung 6 mit einem Steuerdruck beaufschlagbar ist, der in Richtung zur benachbarten Ventilschieberstirnfläche des Inchventils 4 wirkt.

Das Inchventil 4 ist als 2-Wege-Proportionalventil ausgeführt, wobei ein Anschluß T ebenfalls zum Tank 16 führt, während der andere Steueranschluß R über eine Steuerölleitung zum Fahrtrichtungschaltventil der Antriebseinheit 102 geführt ist. Die Steuerölleitung wird von einer Pumpe mit Hydraulikfluid gespeist, das über eine Eingangsblende geführt ist. Von der Steuerölleitung zweigt eine Steuerdruckleitung X₂ ab, die zu der von der Ventilfeder 14 entfernten Ventilschieberstirnseite geführt ist, so daß auf diese Stirnseite des Ventils der dem Druck in der Steuerölleitung entsprechende Steuerdruck und - bei Betätigung des Inchbremsventils 2 - die von der Übertragungseinrichtung 6 aufgebrachte Kraft wirken.

Sobald ein Druck p an der Steuerölleitung anliegt, wirkt über die Steuerdruckleitung X₂ ein Druck auf die Verbindungseinrichtung, so daß diese aufgrund ihres Spiels (ca. 0,5 mm) vom Ventilschieber des Inchventils 4 abhebt und gegen den Ventilschieber des Inchbremsventils 2 gedrückt wird, so daß dieser praktisch über die Übertragungseinrichtung 6 nach oben in Fig. 4 vorgespannt wird.

In einer ersten Endstellung d des Inchventils 4 sind der Tankanschluß T und der Steueranschluß R gesperrt, so daß der Volumenstrom zum Tank Q=0 und (p_{I}=max). In der anderen Endstellung f ist die Verbindung zwischen den Anschlüssen T und R vollständig aufgesteuert, so daß ein maximaler Steuerölfluß von der Antriebseinheit 102 zum Tank 16 erfolgen kann, d.h., es stellt sich ein von der Pumpendrehzahl abhängiger maximaler Volumenstrom Q=f(n), p_{I}=0 ein. In den Zwischenstellungen e ist der Druck am Steueranschluß R stufenlos einstellbar.

Bei stehendem Arbeitsgerät und unbetätigtem Bremspedal 8 befindet sich die Inchbremseinrichtung in dem in Fig. 4 dargestellten Schaltzustand. Bei fahrendem Arbeitsgerät liegt dann in der Steuerölleitung ein drehzahlabhängiger Pumpendruck p an, der vom Inchventil 4 auf beispielsweise 20-22 bar begrenzt ist, so daß eine entsprechende Drehzahl und - über das Fahrtrichtungsschaltventil - die Drehrichtung des Hydromotors vorgegeben wird. Im Fahrbetrieb wird somit der Ventilschieber mittels des Steuerdrucks in der Steuerdruckleitung X₂ in eine Zwischenstellung (e) gebracht, in der der Druck p am Anschluß R geregelt wird. Bei maximaler Pumpenleistung kann beispielsweise der Druck vor der Eingangsblende bis auf 35 bar ansteigen. Üblicherweise wird der maximale Steueröldruck auf etwa 20 bis 22 bar begrenzt, wobei das Inchventil 4 als Druckbegrenzungsventil verwendet wird, indem die Ventilfeder 14 derart ausgelegt wird, daß bei Überschreiten des gewünschten Steuerölschwelldrucks über den Druck in der Steuerdruckleitung X₂ der Ventilschieber des Inchventils 4 verschoben wird, so daß die Verbindung zwischen dem Tankanschluß T und dem Steuerölanschluß R vollständig aufgesteuert wird und der Druck in der Steuerölleitung absinkt, bis der Ventilschieber wieder in seine Regelposition e zurückgekehrt ist. In dieser Regelposition wirkt auch auf die Übertragungseinrichtung 6 der Steuerdruck in der Steuerdruckleitung X₂, so daß die Übertragungseinrichtung 6 gegen die Wirkung der Druckfedern 10, 12 nach oben, d.h. gegen den Ventilschieber des Inchbremsventils 2 gedrückt wird und somit von der benachbarten Stirnfläche des Inchventils 4 abhebt. Die Steuerdruckleitung X₁ ist drucklos, da der Bremsanschluß B mit dem Tank T verbunden ist.

Von der Steuerdruckleitung X2 ist eine Zweigleitung zur Übertragungseinrichtung 6 geführt, so daß an dieser der dem Steueröldruck entsprechende Steuerdruck in der Steuerleitung X₂ anliegt. Das heißt, auf die Übertragungseinrichtung 6 wirken die in den Steuerdruckleitungen X₁ und X₂ herrschenden Steuerdrücke und des weiteren werden die auf die Ventilschieber des Inchbremsventils 2 und des Inchventils 4 wirkenden Kräfte je nach Betriebszustand als Druckkräfte auf die Übertragungseinrichtung 6 übertragen, wenn diese in Anlage am jeweiligen Ventilschieber steht.

Bei Betätigung des Bremspedals 8 wird dessen Stellbewegung zunächst auf die erste Druckfeder 10 übertragen, deren Federkonstante erheblich geringer ist, als diejenige der zweiten Druckfeder 12 (C₁₀ = 19 N/mm; C₁₂ = 268 N/mm). Die Federkonstanten sind so gewählt, daß im ersten Verfahrbereich des Bremspedals 8 im wesentlichen nur die erste Druckfeder 10 zusammengedrückt wird, so daß die zweite Druckfeder 12 etwa als starres Übertragungselement wirkt.

Die resultierende Stellbewegung (Weg-/Kraft-Übertragung) des Inchbremsventilschiebers wird über die Übertragungseinrichtung 6 auf den Ventilschieber des Inchventils 4 übertragen, so daß die Verbindung vom Steuerölanschluß R zum Tank T aufgesteuert wird, wobei durch den ersten Teil der Stellbewegung der Übertragungseinrichtung 6 diese aus dem abgehobenen Zustand (siehe vorhergehende Ausführungen) in Anlage an den Ventilschieber des Inchventils 4 gebracht wird. Bei der weiteren Stellbewegung sinkt der Inchdruck p_{I} in der Steuerölleitung ab während in der Bremsleitung noch kein Druck aufgebaut wird, da sich das Inchbremsventil 2 noch in der "Schaltstellung" a oder in der "Schaltstellung" b befindet, in denen die Verbindung zwischen dem Anschluß P und dem Bremsanschluß B unterbrochen ist.

Das heißt, bei einem geringen Pedalweg α des Bremspedals 8 wird lediglich der Inchdruck p_{I} verringert, während noch kein Bremsdruck p_{B} aufgebaut wird. Zur Regelung des Inchdrucks p_{I} wird der Inchventilschieber in Abhängigkeit von der Stellbewegung des Bremspedals so lange verschoben, bis sich ein Gleichgewicht zwischen den über das Bremspedal 8 und die Ventilfeder 14 aufgebrachten Kräften und den aus den Steuerdrücken X2 am Ventilschieber des Inchventils 4 und an der Übertragungseinrichtung 6 resultierenden Kräften einstellt.

Bei weiterer Betätigung des Bremspedals 8 wird die weitere Kompression der ersten Druckfeder 10 durch geeignete Einrichtungen (siehe folgende Ausführungen) verhindert, so daß diese praktisch als starres Übertragungsglied für die Bremspedalbewegung wirkt und lediglich noch die zweite Druckfeder 12 mit der hohen Federsteifigkeit zur Übertragung der Bremspedalbewegung auf die Ventilschieberanordnung zur Verfügung steht. Das heißt, aufgrund der hohen Federsteifigkeit bedarf es in diesem Betriebszustand einer größeren Betätigungskraft, um das Bremspedal 8 zu bewegen. Beim Zusammendrücken der zweiten Druckfeder 12 wird das Inchbremsventil 2 in die Schaltstellung c gebracht, in der der Anschluß P mit dem Bremsanschluß B verbunden wird, so daß die Bremseinheit 116 mit Hydraulikfluid versorgt wird. Gleichzeitig baut sich in der Steuerdruckleitung X₁ ein entsprechender Steuerdruck auf, der den Ventilschieber des Inchbremsventils 2 gegen die Wirkung der zweiten Druckfeder 12 verschiebt, bis sich ein Druckgleichgewicht eingestellt hat, das der Bremspedalstellung entspricht.

Die Axialbewegung des Inchbremsventil-Ventilschiebers wird über die Übertragungseinrichtung 6, auf die ebenfalls der Druck in der Steuerleitung Xl wirkt, auf den Ventilschieber des Inchventils 4 übertragen. Die Geometrie der Ventilanordnung ist dabei so ausgelegt, daß sich der Ventilschieber des Inchventils 4 in seiner Position f befindet, bevor derjenige des Inchbremsventils 2 in seine Füllatellung c gebracht ist. Des weiteren befindet sich das Inchventil 4 in seiner Position e oder f, wenn sich das Inchbremsventil 2 in der Position c oder b befindet. Bei vollständig betätigtem Bremspedal ist das Inchventil 4 aus seinen mit e bezeichneten Zwischenstellungen in die Endstellung f gebracht, in der die Verbindung zwischen dem Steuerölanschluß R und dem Tankanschluß T vollständig aufgesteuert ist. Das heißt, der Inchdruck p_{I} in der Steuerölleitung geht während der Stellbewegung des Bremspedals 8 gegen 0, so daß der Stellzylinder der Verstellpumpe des Fahrantriebs in seine Neutralstellung gebracht wird und der Hydromotor nicht mehr mit Hydraulikfluid versorgt wird und die volle Bremswirkung des Antriebssystems vorliegt.

Im Betriebszustand hängt die Ventilschieberposition des Inchventils 4 ab vom Gleichgewicht zwischen den durch die Ventilfeder 14 und die Übertragungseinrichtung 6 auf den Inchventilschieber aufgebrachten Kräften und von der aus dem Steuerdruck in der Steuerdruckleitung X₂ resultierenden Kraft, die an der Ventilschieberrückseite in gleiche Richtung wie die von der Übertragungseinrichtung 6 aufgebrachte Kraft wirkt. Bei vollständig ausgesteuertem Inchventil 2 (PX2=0) hängt die Ventilschieberposition im wesentlichen von der Geometrie des Inchbremsventils 2 und der Übertragungseinrichtung 6 sowie von der Federvorspannung der Ventilfeder 14 ab.

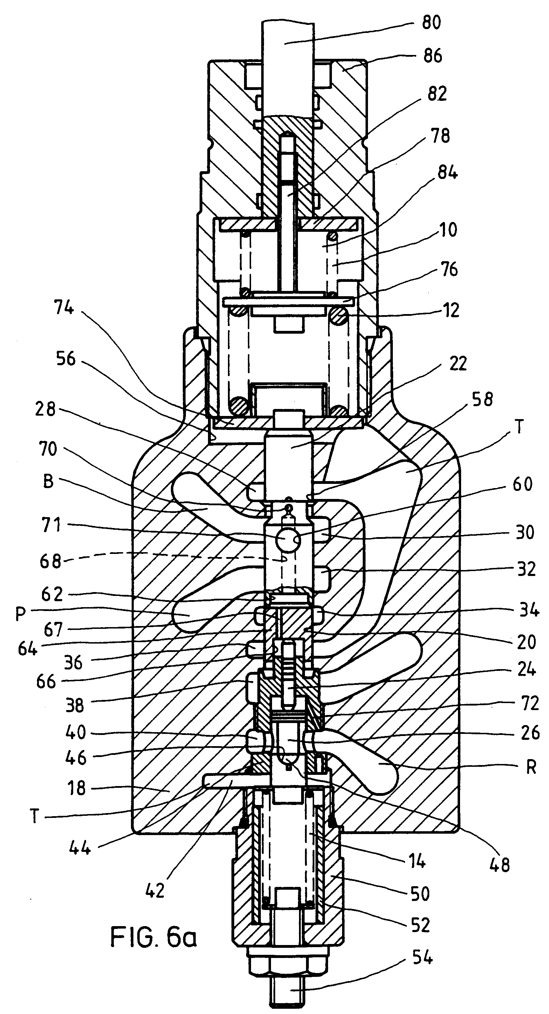

Die Stellcharakteristik der Inchbremseinrichtung mit den Kennlinien des Inchbremsventils 2 und des Inchventils 4 ist in Fig. 5 dargestellt.

Ähnlich wie bei der bekannten Inchbremseinrichtung ist die Ventilanordnung so ausgelegt, daß bei Betätigung des Bremspedals 8 zunächst ein Totweg durchfahren werden muß, bevor das Inchbremsventil 2 betätigt wird, Das heißt, wahrend dieses Totwegs (Pedalweg α = 4°) bleibt der Druck p_{I} in der Steuerölleitung konstant auf seinem von der Ventilfeder 14 vorgegebenen Maximalwert. Bei der weiteren Verschwenkung des Bremspedals 8 (α ≈ 4°-18°) fällt dann der Inchdruck p_{I} von seinem vorgegebenen Maximalwert (20 - 22 bar) auf 0 ab, wobei die Geometrie der Ventilanordnung derart ausgelegt ist, daß sich der Bremsdruck P_{B} erst dann aufbaut, wenn der Inchdruck p_{I} seinen gegen 0 gehenden Minimalwert erreicht hat. Erst dann steigt der Bremsdruck p_{B} in der Bremsleitung an, so daß zusätzlich zur bremsenden Wirkung des Antriebssystems 102 eine Verzögerung über die Bremseinheit 116 erfolgt.

Das heißt, durch die erfindungsgemäße Inchbremseinrichtung läßt sich der bei der bekannten Inchbremseinrichtung vorhandene Überschneidungsbereich (Fig. 3) der beiden Kennlinien p_{I} und P_{B} verhindern und es besteht keine Notwendigkeit, die Achsen des Arbeitsgerätes vorzuspannen. Die erfindungsgemäße Konstruktion erlaubt somit über den gesamten Inchbereich eine feinfühlige Steuerung durch die Bedienperson, wobei gegenüber herkömmlichen Lösungen der vorrichtungstechnische Aufwand und auch der Platzaufwand ganz erheblich verringert werden kann, da, wie im folgenden noch gezeigt werden wird, das Inchventil 4 in das Inchbremsventil 2 integriert werden kann.

In Fig. 6a ist ein erstes konkretes Ausführungsbeispiel einer Inchbremseinrichtung dargestellt, deren Funktion derjenigen des Ausführungsbeispiels aus Fig. 5 entspricht.

Die integrierte Ventilanordnung, die die Funktionen des Inchbremsventils 2 und des Inchventils 4 vereint, hat ein Ventilgehäuse 18, mit einer Ventilbohrung 20, in der axial hintereinander liegend ein erster Ventilschieber 22 des Inchbremsventils 2, ein Stift 24 und ein zweiter Ventilschieber 26 aufgenommen sind.

In der Ventilbohrung 20 des Ventilgehäuses 18 ist ein erster Ringraum 28 ausgebildet, der mit dem Tankanschluß T verbunden ist. Daran anschließend hat die Ventilbohrung 20 einen zweiten Ringraum 30 und einen dritten Ringraum 32, die mit dem Bremsanschluß B und dem zum Speicher fahrenden Anschluß P verbunden sind. Die Ringräume 28, 30 und 32 und damit die Anschlüsse T, B und P sind durch entsprechende Verschiebung des ersten Ventilschiebers 22 in der in Zusammenhang mit Fig. 4 beschriebenen Weise verbindbar.

Im Anschluß an den dritten Ringraum 32 ist ein weiterer Ringraum 34 vorgesehen, an den ein Druckaufnehmer o.ä. anschließbar ist.

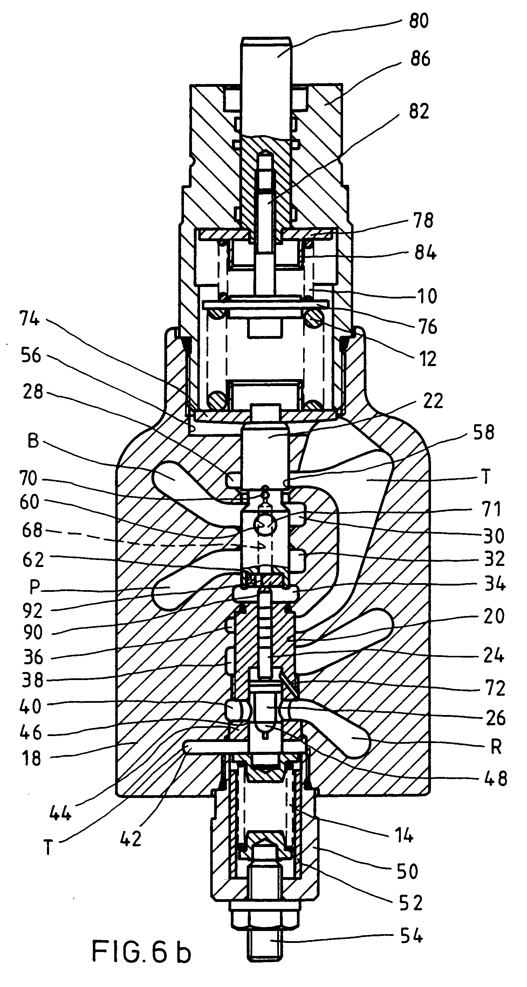

In der Darstellung nach Fig. 6 in Axialrichtung unter dem weiteren Ringraum 34 ist ein fünfter Ringraum 36 vorgesehen, der ebenfalls mit dem Tankanschluß T verbunden ist.

Daran schließen sich drei weitere Ringräume 38, 40 und 42 an, wobei der Ringraum 38 beim gezeigten Ausführungsbeispiel ein toter Anschluß ist, der bei einer anderen Ventilvariante Verwendung findet. Der siebte Ringraum 40 ist mit dem Steuerölanschluß R verbunden und der axial unten liegende achte Anschluß 42 ist wiederum mit dem Tank T verbunden.

In dem Axialbereich, in dem die Ringräume 38, 40 und 42 angeordnet sind, ist in der Ventilbohrung 20 eine Einsatzbuchse 44 eingeschraubt, die den Ringraum 38 abschließt und in der Radialbohrungen zur Fluidverbindung zu dem siebten und achten Ringraum 40, 42 vorgesehen sind.

In einer Durchgangsbohrung der Einsatzbuchse 44 ist der zweite Ventilschieber 26 des Inchventils 4 in Axialrichtung verschiebbar geführt. Dieser zweite Ventilschieber 26 ist etwa in seinem Mittelabschnitt radial zurückgesetzt, wobei im Bereich der Radialschulter eine Steuerkante 46 zur Aufsteuerung der Verbindung zwischen den Ringräumen 40 und 42, d.h. zwischen dem Steuerölanschluß R und dem Tankanschluß T ausgebildet ist. Die Steuerkante 46 ist bei diesem Ausführungsbeispiel durch die Umfangskanten von Steuerfenster(n) 48 ausgebildet, durch die ein stetiges, stufenloses Aufsteuern der Verbindung zwischen den Anschlüssen R und T möglich ist.

Die Durchgangsbohrung der Einsatzbuchse 44 ist in dem in der Darstellung nach Fig. 6 oberen Teil über eine Radialschulter verjüngt, so daß eine Axialführung für den Stift 24 gebildet wird, dessen Durchmesser geringer ist, als der Durchmesser des zweiten Ventilschiebers 26. Die untere Stirnseite des Stifts 24 ist in Anlage bringbar an die benachbarte Stirnseite des zweiten Ventilschiebers 26. An dem von dem Stift 24 entfernten Endabschnitt des zweiten Ventilschiebers 26 ist in Axialrichtung unterhalb des achten Ringraumes 42 ein Federteller am zweiten Ventilschieber 26 abgestützt, an dem die Ventilfeder 14 abgestützt ist. Diese ist in einem Federgehäuse 50 mit einer Einsatzhülse 52 aufgenommen, wobei das von dem zweiten Ventilschieber 26 entfernte Ende der Ventilfeder 14 an einem Anschlag und einer Verstellschraube 54 abgestützt ist, über die die Federvorspannung der Ventilfeder 14 variierbar ist.

Der in Axialrichtung oberhalb (Ansicht nach Fig. 6) des Stifts 24 angeordnete erste Ventilschieber 22 des Inchbremsventils 2 ragt mit seinem oberen Endabschnitt in eine Aufnahmebohrung 56 des Ventilgehäuses hinein, die gegenüber der Ventilbohrung 20 über eine Radialschulter erweitert ist.

Der erste Ventilschieber 22 ist in seinem Mittelabschnitt durch einen Einstich in Radialrichtung zurückgesetzt, wobei die in Fig. 6 obere Radialschulter eine Steuerkante 58 ausbildet. An dem vom Aufnahmeraum 56 entfernten Endabschnitt des ersten Ventilschiebers 22 ist eine stirnseitige Sacklochbohrung 62 vorgesehen, die einen Zylinderraum bildet, der von einem Ringmantel des ersten Ventilschiebers 22 begrenzt ist. In der Stirnfläche der Sacklochbohrung 62 ist eine Axialbohrung 68 ausgebildet, die in einer Radialbohrung 70 mündet, die in der gezeigten Ausgangsposition des Inchbremsventils 2 etwa im Bereich zwischen dem ersten Ringraum 28 und dem zweiten Ringraum 30 angeordnet ist. Zwischen der Radialbohrung 70 und der Stirnfläche der Sacklochbohrung 62 ist zumindest eine sich in Radialrichtung erstreckende Steuereinsenkung 71 ausgebildet, deren Achse die Axialbohrung 68 kreuzt und die die Steuerkanten 60 am Außenumfang des zweiten Ventilschiebers 26 ausbildet. Über die Steuerkante 58 wird die Verbindung zwischen dem Tankanschluß T und dem Bremsanschluß B auf- oder zugesteuert, während über die eine oder mehreren radialen Steuereinsenkungen 71 die Verbindung zwischen dem Anschluß P und dem Bremsanschluß B angesteuert bzw. ermöglicht wird. Der Druck am Anschluß B läßt sich über die Radialbohrung 70 und die Axialbohrung 68 an die Rückseite des ersten Ventilschiebers 22 führen (Steuerdruckleitung X₁).

Im Anschluß an den Ringmantel des ersten Ventilsschiebers 22 ist ein Plunger 64 vorgesehen, der den Ventilschieber 22 in Axialrichtung verlängert, und der in seiner gezeigten Ausgangsstellung eine stirnseitige Abdeckung der Sacklochbohrung 62 bildet und in der Ventilbohrung 20 geführt ist. Der von der Sacklochbohrung 62 entfernte Endabschnitt des Plungers 64 ist mit einer stirnseitigen Aufnahmebohrung 66 versehen, in die ein Axialbund der Einsatzbuchse 44 eintaucht. Die vom zweiten Ventilschieber 26 entfernte Stirnfläche des Stifts 24 ist in Anlage bringbar an die Bodenfläche der Aufnahmebohrung 66 des Plungers 64. Dieser ist des weiteren mit einer exzentrischen Verbindungsbohrung 67 versehen, über die der von der Sacklochbohrung 62 gebildete Zylinderraum des ersten Ventilschiebers 22 und der von der Aufnahmebohrung 66 gebildete Raum miteinander verbunden sind, so daß der Plunger druckentlastet ist.

Über die beiden Bohrungen 68, 70 läßt sich - wie bereits erwähnt - der Druck am Bremsanschluß B an die Rückseite des ersten Ventilschiebers 22, d.h. an die Stirnseite der Sacklochbohrung 62 führen. Dieser Druck wird dann durch die Verbindungsbohrung 67 des Plungers 64 in die Aufnahmebohrung 66 weitergeleitet, in die der obere Endabschnitt des Stifts 24 eintaucht.

Der radial erweiterte Abschnitt der Durchgangsbohrung der Einsatzbuchse 44, in der der untere Endabschnitt des Stifts 24 aufgenommen ist, ist über eine zweite Verbindungsbohrung 72 in der Einsatzbuchse 44 mit dem Steuerölanschluß R verbunden, so daß über diese zweite Verbindungsbohrung 72 der Druck am Steuerölanschluß an die von der Ventilfeder 14 entfernte Stirnseite des zweiten Ventilschiebers 26 und an die benachbarte Stirnfläche des Plungers 24 geführt ist.

In Fig. 6b ist ein Ausführungsbeispiel dargestellt, bei dem auf den Plunger 64 weitestgehend verzichtet wurde, und dieser praktisch nur noch als Scheibe 90 ausgebildet ist, die in der Aufnahmebohrung 66 des ersten Ventilschiebers 22 aufgenommen ist. Die Scheibe 90 ist durch eine Verbindungsbohrung 92 durchsetzt, die der Verbindungsbohrung 67 des Plungers 64 entspricht. Die Achse der Verbindungsbohrung 92 (67) ist seitlich zur Achse des Stifts 24 versetzt, so daß dieser nicht die Verbindungsbohrung 92 (67) verschließen kann. Da die sonstigen Bauelemente dieses Ausführungsbeispiels identisch mit denjenigen des Ausführungsbeispiels aus Fig. 6a sind, wird auf eine detaillierte Beschreibung verzichtet.

An dem in den Aufnahmeraum 56 des Ventilgehäuses 18 eintauchenden Endabschnitt des ersten Ventilschiebers 22 ist ein erster Federteller 74 über eine Radialschulter eines Axialbundes befestigt, an dem die zweite Druckfeder 12 (siehe Fig. 4) abgestützt ist. An dem in Fig. 6 oberen Endabschnitt der zweiten Druckfeder 12 ist ein zweiter Federteller 76 vorgesehen, der seinerseits den unteren Endabschnitt der ersten Druckfeder 10 abstützt. Deren oberer Endabschnitt liegt an einem dritten Federteller 78 an, der an einer Betätigungsstange 80 befestigt ist, die in Wirkverbindung mit dem Bremspedal 8 steht.

Der zweite und der dritte Federteller 76 und 78 sind durch eine Vorspannschraube 82 durchsetzt, die in die Betätigungsstange 80 eingeschraubt ist, wobei die Federteller 76 und 78 gleitend an der Vorspannschraube 82 geführt sind. Der zweite Federteller 76 liegt an einem Radialbund der Vorspannschraube 82 auf, wobei durch Ein- oder Ausschrauben der Vorspannschraube 82 eine Hubeinstellung erfolgen kann. Die zweite Druckfeder ist ohne Vorspannung eingebaut, während die erste Druckfeder 10 mit Vorspannung eingebaut ist. An dem dritten Federteller 78 ist ein Axialführungsbund 84 ausgebildet, dessen Stirnseite in einem vorbestimmten Abstand zum zweiten Federteller 76 steht und mit dieser in Anlage bringbar ist.

Die gesamte Federanordnung mit den Druckfedern 10, 12 und den entsprechenden Federtellern ist in einem Führungsgehäuse 86 aufgenommen, in der auch die Betätigungsstange 80 geführt ist und das in einen entsprechenden Nabenabschnitt des Ventilgehäuses 18 eingeschraubt ist. Im gezeigten Ausführungsbeispiel steht der erste Federteller 74 in einem vorbestimmten Axialabstand zur benachbarten Stirnfläche des Aufnahmeraums 56, so daß die maximale Hubbewegung des Ventilschiebers 22 durch diesen Axialabstand begrenzt ist.

Die Funktionsweise der in Fig. 6 dargestellten Ventilanordnung entspricht derjenigen, wie sie in Zusammenhang mit Fig. 4 beschrieben wurde, so daß auf diesbezügliche Erläuterungen zur Vermeidung von Wiederholungen verzichtet werden kann.

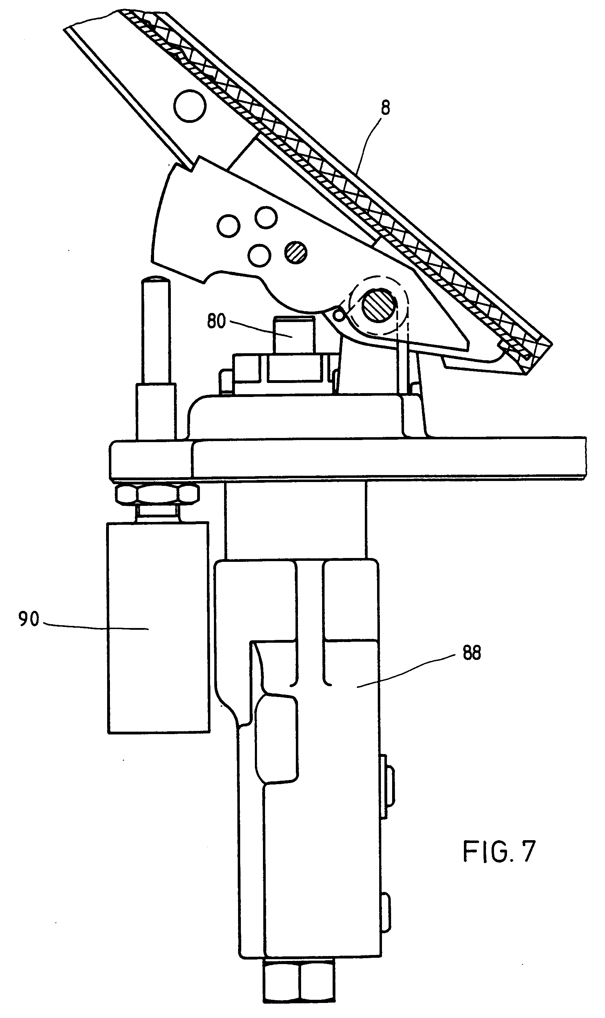

In Fig. 7 ist ein weiteres Ausführungsbeispiel der erfindungsgemäßen Inchbremseinrichtung dargestellt, wobei dem integrierten Inchbremsventil 88 aus Fig. 6 eine Druckpunkteinrichtung 90 zugeordnet ist, über die bei Betätigung des Bremspedals 8 ein Druckpunkt aufgebaut werden kann, der den Übergang vom reinen Inchvorgang zum Bremsvorgang anzeigt, so daß die Bedienperson bei der Betätigung des Bremspedals 8 eine Rückmeldung darüber erhält, wann die Bremseinheit 116 des Arbeitsgerätes eingreift, so daß ein versehentliches Überbremsen des Arbeitsgerätes verhinderbar ist. Die in Fig. 7 dargestellte Variante ist mit einer nachrüstbaren Druckpunkteinrichtung 90 versehen, es ist jedoch auch eine Lösung möglich, bei der die Druckpunkteinrichtung 90 in das integrierte Inchbremsventil 88 eingebaut ist, so daß eine noch kompaktere Ausführungsform vorstellbar ist. Die Druckpunkteinrichtung kann auch zum Aufbau eines weiteren Druckpunktes verwendet werden, der den Beginn des Inchvorgangs nach dem Durchfahren des Totwegs (Fig. 5) kennzeichnet.

Beide Varianten der Druckpunkteinrichtung sind in der vorgenannten älteren Patentanmeldung P 195 13 805 der Anmelderin im Detail beschrieben, so daß hinsichtlich konstruktiver Details auf die Ausführungen in dieser Patentanmeldung verwiesen sei, deren Offenbarung vollinhaltlich auch zur Offenbarung der vorliegenden Anmeldung zu zählen ist.

In Abweichung von dem in Fig. 6a beschriebenen Ausführungsbeispiel kann der Plunger 64 auch ohne Verbindungsbohrung 67 ausgebildet werden. In diesem Fall ermöglicht der Plunger einen sprunghaften Druckanstieg (in Form einer Sprungfunktion) des Bremsdrucks.

Mit der erfindungsgemäßen Inchbremseinrichtung wird eine Ventilanordnung zur Verfügung gestellt, die sich bei kompaktem, einfachem Aufbau durch eine erhöhte Feinfühligkeit im Übergangsbereich vom Inchvorgang zum Bremsvorgang und damit durch eine vereinfachte Bedienbarkeit auszeichnet.

## Patentansprüche

1. Inchbremseinrichtung für ein hydraulisch betriebenes Arbeitsgerät mit einer Bremseinrichtung (116) und einer Arbeitseinrichtung (102), wobei durch Betätigung einer Betätigungseinrichtung (8, 80) der Inchbremseinrichtung die Antriebseinrichtung (102) und die Bremseinrichtung (116) zur Erzeugung einer Bremswirkung ansteuerbar sind, und wobei die Inchbremseinrichtung eine Inchventilanordnung (4) und eine Bremsventilanordnung (2) hat, über die die Antriebseinrichtung (102) beziehungsweise die Bremseinrichtung (116) ansteuerbar sind, dadurch gekennzeichnet, daß ein Bremsventilschieber (22) der Bremsventilanordnung (2) und ein Inchventilschieber (26) der Inchventilanordnung (4) hintereinander liegend angeordnet sind und daß der Inchventilschieber (26) mittels einer axial verschiebbaren, mit der Bremsventilanordnung (2) in Wirkverbindung stehenden Übertragungseinrichtung (6, 24) betätigbar ist.

2. Inchbremseinrichtung nach Patentanspruch 1, dadurch gekennzeichnet, daß die Übertragungseinrichtung (6, 24) derart ausgebildet ist, daß die Ansteuerung der Bremseinrichtung (116) erst dann erfolgt, wenn ein Steuerölanschluß (R) der Antriebseinrichtung (102) mit einem Tank (T) verbunden ist, so daß der Inchdruck (p_{I}) gegen 0 geht.

3. Inchbremseinrichtung nach Anspruch 1 oder 2, dadurch gekennzeichnet, daß die Bremsventilanordnung (2) und die Inchventilanordnung (4) in einem gemeinsamen Ventilgehäuse (18) aufgenommen sind.

4. Inchbremseinrichtung nach Patentanspruch 3, dadurch gekennzeichnet, daß ein Bremsventilschieber (22) über einen Stift (24) als Übertragungseinrichtung auf einen Inchventilschieber (26) wirkt und die Ventilschieber (22, 26) und der Stift (24) in einer gemeinsamen Ventilbohrung (20) aufgenommen sind, wobei der Stift vorzugsweise mit Axialspiel zwischen den Ventilschiebern (22, 26) aufgenommen ist.

5. Inchbremseinrichtung nach einem der vorhergehenden Patentansprüche, dadurch gekennzeichnet, daß die Inchventilanordnung ein 2-Wege-Proportionalventil (4) hat, über das der Tank (T) mit dem Steuerölanschluß (R) verbindbar ist und daß die Bremsventilanordnung ein 3/3-Wege-Schaltventil (2) hat, über das ein Bremsanschluß (B) wahlweise mit dem Tank (T) oder einer Druckquelle verbindbar ist.

6. Inchbremseinrichtung nach einem der Ansprüche 3 bis 5, dadurch gekennzeichnet, daß auf eine Stirnseite des Inchventilschiebers (26) eine vorzugsweise einstellbare Ventilfeder (14) wirkt und daß auf die davon entfernte Stirnseite des Bremsventilschiebers (22) zwei in Reihe geschaltete Druckfedern (10, 12) wirken, auf denen die Betätigungseinrichtung (8, 80) der Inchbremseinrichtung abgestützt ist.

7. Inchbremseinrichtung nach Anspruch 6, dadurch gekennzeichnet, daß die Druckfedern (10, 12) koaxial hintereinanderliegend angeordnet sind und daß die der Betätigungseinrichtung (8, 80) zugewandte erste Druckfeder (10) mit Vorspannung aufgenommen ist und die zweite Druckfeder (12) im wesentlichen erst nach einer vorbestimmten Kompression der ersten Druckfeder (10) komprimierbar ist.

8. Inchbremseinrichtung nach einem der Ansprüche 3 bis 7, gekennzeichnet durch eine Steuerbohrung (68, 70) über die der Druck im Bremsanschluß (B) an die Bremsventilschieberrückseite führbar ist und durch eine Verbindungsbohrung (72) durch die der Druck am Steuerölanschluß (R) zur Rückseite des Inchventilschiebers (26) führbar ist.

9. Inchbremseinrichtung nach einem der vorhergehenden Ansprüche, dadurch gekennzeichnet, daß der Betätigungseinrichtung (8, 80) eine Druckpunkteinrichtung (90) zugeordnet ist, über die im Übergangsbereich zwischen Inchen und Bremsen ein Druckpunkt aufbaubar ist, der beim Betätigen der Betätigungseinrichtung (8, 80) zu überwinden ist.

10. Inchbremseinrichtung nach einem der Ansprüche 6 bis 9, dadurch gekennzeichnet, daß der Ventilfeder (14) eine Einstelleinrichtung (54) für die Federvorspannung zugeordnet ist.

11. Inchbremseinrichtung nach einem der Ansprüche 3 bis 10, dadurch gekennzeichnet, daß der Stift (24) und der Inchventilschieber (26) in einer Einsatzbuchse (44) geführt sind, die in der Ventilbohrung (20) des Ventilgehäuses (18) aufgenommen ist.

12. Inchbremseinrichtung nach einem der Ansprüche 3 bis 11, dadurch gekennzeichnet, daß an der Rückseite des Bremsventilschiebers (22) ein Plunger (64) angeordnet ist, an dem eine Anlagefläche für den Stift (24) ausgebildet ist, wobei der Plunger (64) von einer Durchgangsbohrung (67) durchsetzt ist, über die der Druck an der Bremsventilschieberrückseite zur Anlagefläche führbar ist.

## Claims

1. Inching and braking system for hydraulically operated apparatus with a braking system (116) and a drive system (102), wherein the drive system (102) and the braking system (116) can be controlled by actuation of a control device (8, 80) of the inching and braking system in order to produce a braking effect, and wherein the inching and braking system has an inching valve arrangement (4) and a brake valve arrangement (2) via which arrangements the drive system (102) and the braking system (116) can respectively be controlled, characterized in that a brake valve slide (22) of the brake valve arrangement (2) and an inching valve slide (26) of the inching valve arrangement (4) are arranged one behind the other and that the inching valve slide (26) is adapted to be actuated by means of an axially displaceable transmission device (6, 24) which is operatively connected to the brake valve arrangement (2).

2. Inching and braking system according to claim 1, characterised in that the transmission device (6, 24) is so constructed that activation of the braking system (116) only takes place when a control oil connection (R) of the drive system (102) is connected to a tank (T), with the result that the inching pressure (P_{I}) tends towards 0.

3. Inching and braking system according to claim 1 or 2, characterised in that the brake valve arrangement (2) and the inching valve arrangement (4) are accommodated in a common valve box (18).

4. Inching and braking system according to claim 3, characterised in that a brake valve slide (22) operates on an inching valve slide (26) via a pin (24) acting as a transmission device, and the valve slides (22, 26) and the pin (24) are accommodated in a common valve bore (20), the pin preferably being accommodated between the valve slides (22, 26) with axial freeplay.

5. Inching and braking system according to any of the preceding claims, characterised in that the inching valve arrangement has a two-way proportional valve (4) via which the tank (T) can be connected to the control oil connection (R), and that the brake valve arrangement has a 3/3-way shift valve (2) via which a brake connection (B) can be connected to the tank (T) or to a pressure source, as required.

6. Inching and braking system according to any of claims 3 to 5, characterised in that operating on one end face of the inching valve slide (26) is a valve spring (14) which is preferably adjustable, and that operating on the end face, remote therefrom, of the brake valve slide (22) are two compression springs (10, 12) connected in series, upon which the control device (8, 80) of the inching brake system is supported.

7. Inching and braking system according to claim 6, characterised in that the compression springs (10, 12) are arranged coaxially one behind the other and that the first compression spring (10) which faces the control device (8, 80) is received with initial tension and the second compression spring (12) is adapted to be compressed substantially only after the first Compression spring (10) has been compressed by a preset amount.

8. Inching and braking system according to any of claims 3 to 7, characterised by a control bore (68, 70) via which the pressure in the brake connection (B) can be conducted to the reverse of the brake valve slide and by a connecting bore (72) through which the pressure at the control oil connection (R) can be conducted to the reverse of the inching valve slide (26).

9. Inching and braking system according to any of the preceding claims, characterised in that associated with the control device (8, 80) is a centre-of-pressure device (90) which in the transition zone between inching and braking can be used to build up a centre of pressure which must be overcome when the control device (8, 80) is actuated.

10. Inching and braking system according to any of claims 6 to 9, characterized in that associated with the valve spring (14) is an adjusting device (54) for initial tensioning of the spring.

11. Inching and braking system according to any of claims 3 to 10, characterized in that the pin (24) and the inching valve slide (26) are set in an insert bush (44) which is accommodated in the valve bore (20) of the valve box (18).

12. Inching and braking system according to any of claims 3 to 11, characterized in that arranged on the reverse of the brake valve slide (22) is a plunger (64) on which is configured a contact surface for the pin (24), the plunger (64) being traversed by a through hole (67) via which the pressure on the reverse of the brake valve slide can be conducted to the contact surface.

## Revendications

1. Dispositif de ralenti et de freinage pour un outil de travail à commande hydraulique, comportant un dispositif de freinage (116) et un dispositif de travail (102), et dans lequel sous l'effet de l'actionnement d'un dispositif d'actionnement (8, 80) du dispositif de ralenti et de freinage le dispositif d'entraînement (102) et le dispositif de freinage (116) peuvent être commandés pour produire une action de freinage, et dans lequel le dispositif de ralenti et de freinage comporte un dispositif de soupape de ralenti (4) et un dispositif de soupape de freinage (2), à l'aide desquels le dispositif d'entraînement (102) et le dispositif de freinage (116) peuvent être commandes, caractérisé en ce qu'un tiroir (22) de la soupape de freinage du dispositif de soupape de freinage (2) et un tiroir (26) de la soupape de ralenti du dispositif de soupape de ralenti (4) sont montés l'un derrière l'autre, et que le tiroir (26) de la soupape de ralenti peut être actionné au moyen d'un dispositif de transmission (6, 24) qui est déplaçable axialement et coopère avec le dispositif de soupape de freinage (2).

2. Dispositif de ralenti et de freinage selon la revendication 1, caractérisé en ce que le dispositif de transmission (6, 24) est agencé de telle sorte que la commande du dispositif de freinage (116) s'effectue uniquement lorsqu'un raccord pour l'huile de commande (R) du dispositif d'entraînement (102) est relié à un réservoir (T) de sorte que la pression de ralenti (P_{I}) tend vers 0.

3. Dispositif de ralenti et de freinage selon la revendication 1 ou 2, caractérisé en ce que le dispositif de soupape de freinage (2) et le dispositif de soupape de ralenti (4) sont logés dans un boîtier commun (18).

4. Dispositif de ralenti et de freinage selon la revendication 3, caractérisé en ce qu'un tiroir (22) de la soupape de freinage agit par l'intermédiaire d'une tige (24) en tant que dispositif de transmission, sur un tiroir (26) de la soupape de ralenti, et que les tiroirs (22, 26) des soupapes et la tige (24) sont logés dans un alésage commun de soupape (20), la tige étant logée de préférence avec un jeu axial entre les tiroirs (22, 26) des soupapes.

5. Dispositif de ralenti et de freinage selon l'une des revendications précédentes, caractérisé en ce que le dispositif de soupape de ralenti possède une soupape proportionnelle à 2 voies (4), au moyen de laquelle le réservoir (T) peut être raccordé au raccord pour l'huile de commande (R), et que le dispositif de soupape de freinage possède une soupape de commutation à 3/3 voies (2), au moyen de laquelle un raccord de freinage (T) peut être relié au choix au réservoir (T) ou à une source de pression.

6. Dispositif de ralenti et de freinage graduel selon l'une des revendications 3 à 5, caractérisé en ce qu'un ressort de soupape (14) de préférence réglable agit sur une face frontale du tiroir (26) de la soupape de ralenti, et que deux ressorts de pression (10, 12), qui sont montés en série et sur lesquels prend appui le dispositif d'actionnemnet (8, 80) du dispositif de ralenti et de freinage, agissent sur la face frontale du tiroir (22) de la soupape de freinage, qui est éloignée du ressort de soupape.

7. Dispositif de ralenti et de freinage selon la revendication 6, caractérisé en ce que les ressorts de pression (10, 12) sont disposés coaxialement l'un derrière l'autre, et que le premier ressort de pression (10) tourné vers le dispositif d'actionnemnet (8, 80) est logé avec précontrainte et que le second ressort de pression (12) peut être comprimé essentiellement uniquement après une compression prédéterminée du premier ressort de pression (10).

8. Dispositif de ralenti et de freinage selon l'une des revendications 3 à 7, caractérisé par un perçage de commande (68, 70), au moyen duquel la pression dans le raccord de freinage (B) peut être envoyée au côté arrière du tiroir de la soupape de freinage, et par un perçage de raccordement (72), au moyen duquel la pression au niveau du raccord pour l'huile de commande (R) peut être envoyée au côté arrière du tiroir (26) de la soupape de ralenti.

9. Dispositif de ralenti et de freinage selon l'une des revendications précédentes, caractérisé en ce qu'au dispositif d'actionnement (8, 80) est associé un dispositif (90) à point de pression, au moyen duquel un point peut être établi dans la zone de transition entre le ralenti et le freinage, point de pression qui doit être dépassé lors de l'actionnement du dispositif d'actionnement (8, 80).

10. Dispositif de ralenti et de freinage selon l'une des revendications 6 à 9, caractérisé en ce qu'au ressort de soupape (14) est associé un dispositif (54) de réglage de la précontrainte du ressort.

11. Dispositif de ralenti et de freinage selon l'une des revendications 3 à 10, caractérisé en ce que la tige (24) et le tiroir (26) de la soupape de ralenti est guidé dans une douille d'insertion (44), qui est logée dans le perçage (20) du boîtier de soupape (18).

12. Dispositif de ralenti et de freinage selon l'une des revendications 3 à 11, caractérisé en ce que sur la face arrière du tiroir (22) de la soupape de freinage est disposé un plongeur (64), sur lequel est formée une surface d'application pour la tige (24), le plongeur (64) étant traversé par un perçage traversant (67), au moyen duquel la pression au niveau de la face arrière du tiroir de la soupape de freinage peut être appliquée à la surface d'application.
